# EUROPEAN PATENT SPECIFICATION

(11) **EP 2 712 661 B1**
(45) Date of publication and mention of the grant of the patent: **24.05.2017**
(21) Application number: 13185586.8
(22) Date of filing: 23.09.2013
(51) Int. Cl.: A63H 17/36, A63H 23/04, A63H 27/26, A63H 27/10, A63H 29/00, A63H 27/00, A63H 30/04

(54) **Propulsion apparatus and method of use**
Vortriebsvorrichtung und Verwendungsverfahren
Appareil de propulsion et son procédé d'utilisation

(30) Priority: 01.10.2012 GB 201217535
(43) Date of publication of application: 02.04.2014
(73) Proprietor: DaVinci Engineering Limited, Kowloon Hong Kong (CN)
(72) Inventor: Frawley, Sean Micheal, Kowloon (CN)
(74) Representative: Fulton, David James

(56) References cited:
- DE-A1- 2 734 914
- US-A- 4 545 776
- US-A- 5 403 222

## Description

The present invention relates to a propulsion apparatus and method of use. The invention has particular application to the control of toys which are propelled through a fluid, including flying toys such as aeroplanes and blimp-type aircraft. Aspects of the invention relate to toys which incorporate such apparatus.

### Background to the Invention

Remote-controlled toys have enjoyed increasingly popularity as designs and manufacturing techniques have improved to enable toys with improved functionality to be produced and sold at reduced cost than previously possible. Examples of such toys include aeroplanes, blimp-type flying toys (which may be neutrally buoyant), wheeled vehicles, and waterborne toys including vessels such as boats, hovercraft and submarines, see for example German patent number DE 2,734,914 and US patent numbers US 4,545,776 and US 5,403,222. Improved design and manufacture has been achieved by replacing conventional control mechanisms such as those which include multiple motors and/or expensive servo motors with simpler mechanisms. A typical objective is to provide the toy with motion control in two-dimensions with as few components as possible in order to reduce the cost and weight of the apparatus.

Various methods for simplifying directional control of toy aircraft have been proposed. US 7,121,505 describes a method stated to be suitable for use in toy aeroplanes and ornithopters (flapping-wing aircraft) which uses a single reversible electric motor to generate a propulsion force. In one example, the propulsion force is produced by a propeller with a reversible pitch so that it provides a forward propulsion force regardless of its direction of rotation. A torque reaction force from the propeller motor provides directional control for the aircraft. In another example, applied to an ornithopter, a torque reaction force from the motor changes the direction of an in-built asymmetry in the wing-flapping mechanism.

US 7,331,838 describes a toy aircraft in which the motor torque and tail trim are configured to provide a high turning radius and lift at high throttle, but enable substantially straight flight when the throttle is eased back into a low throttle position.

WO 2011/057048 describes another control mechanism for a neutrally buoyant flying toy. The mechanism improves on previously proposed propulsion and control mechanisms by using a reciprocating propulsion surface in conjunction with a movable weight element to adjust the pitch of the toy. The arrangement of WO 2011/057048 facilitates the production of a toy which simulates the movement of a swimming animal such as a shark or a fish.

While the implementations disclosed in the above references provide some improvements in the field of toy control, each has its own deficiencies and drawbacks. For example, the configuration of US 7,121,505 is only suitable for use with articulated propellers. Such propellers are less durable, heavier, and more expensive than permanent twist propellers. US 7,331,838 describes a simple control mechanism with relatively low cost, but which has severely limited control. The mechanism of WO 2011/057048 is relatively complex and does not have general application to a wide range of toy or vehicle types.

It is therefore an object of the invention to provide an apparatus and method for control of the toy which obviates or mitigates the disadvantages of previously proposed apparatus and methods.

It is amongst the aims and objective of the invention to provide a propulsion apparatus and method of use which is applicable to a wide range of toy and vehicle types, including aeroplanes, blimp-type aircraft, surface and subsurface water-borne vessels, and wheeled vehicles.

It is a further aim and objective of the invention to provide a simple and/or low-cost mechanism for the control of the motion of a toy or vehicle.

Other aims and objects of the invention will become apparent from reading the following description.

### Summary of the Invention

According to a first aspect of the invention, there is provided a propulsion apparatus for a toy, the propulsion apparatus comprising:
a rotating drive member having an axis of rotation;
a reversible motor coupled to the rotating drive member to rotate the drive member in first and second directions;
a mounting arrangement configured to pivotally mount the rotating drive member onto a toy about a mount axis; and
at least one pivot stop mechanism;
wherein the apparatus is configured such that operation of the reversible motor to rotate the drive member in the first direction causes the drive member to pivot about the mount axis to a first position defined by the at least one pivot stop mechanism and provide a propulsion force in a first propulsion direction;
and wherein operation of the reversible motor to rotate the drive member in the second direction causes the drive member to pivot about the mount axis to a second position defined by the at least one pivot stop mechanism and provide a propulsion force in a second propulsion direction;
characterised in that the first and second propulsion directions are within 90 degrees of one another, so that in both the first and second positions the rotating drive member provides an overall thrust for the toy in the same general direction.

The present invention therefore provides a simple means of varying the propulsion direction of the toy using only the control of a single reversible motor.

Preferably, the rotating drive member is a propeller, which may be a rigid propeller and/or have a fixed propeller pitch. Alternatively the rotating drive member may be a wheel.

The reversible motor and rotating drive member may form a drive assembly, which may be configured to be pivotally mounted on the toy.

The mount axis is preferably inclined (i.e. non-parallel) with respect to the axis of rotation, and may be substantially perpendicular to the axis of rotation. The axis of rotation may be substantially horizontal, and/or the mount axis may be substantially vertical.

The pivot stop mechanism may comprise a pivoting component coupled to the rotating drive member and one or more stop members in a fixed position relative to the toy.

There may be provided a toy comprising the propulsion apparatus of the first aspect of the invention. Preferably the toy is a remote-control toy, and may comprise a receiver for wirelessly reception of a control signal.

The toy may be selected from the group consisting of: an aeroplane, a blimp-type aircraft, a waterborne toy, or a wheeled toy. The apparatus may be configured to enable the rotating drive member to pivot through approximately 180 degrees.

The first and second propulsion directions are preferably both in a predominant direction. Preferably, the first and second propulsion directions may be within 45 degrees of one another.

The first and second propulsion directions are preferably non-parallel (i.e. are inclined to one another). The first and second propulsion directions may therefore be selected alternately to impart a serpentine or meandering motion to a toy in use. By varying the relative periods during which the drive member is driven to rotate in the first and second directions, the predominant direction of movement can be selected. In some embodiments of the invention, a control system for the propulsion apparatus may be configured to enable a user to manually select the periods during which the drive member is driven to rotate in the first and second directions, and may therefore enable manual control of a serpentine or meandering motion. In alternative embodiments, a control system for the propulsion apparatus may be configured to enable a user to select a predominant direction of motion of the toy, with the periods during which the drive member is driven to rotate in the first and second directions selected automatically by the control system.

One or both of the first and second propulsion directions may comprise an arcuate or curved propulsion direction to the toy. The propulsion apparatus may therefore provide the toy with a turn radius when in one or both of the first or second positions. The turn radius or arcuate or curved propulsion direction may be determined by design parameters of the propulsion apparatus and/or toy selected from trim and motor torque.

Preferably the turn radius is dependent on the operating power of the reversible motor. The propulsion apparatus may be configured to drive the reversible motor at a plurality of operating power levels, and may therefore provide a plurality of turn radii when in one or both of the first or second positions. Preferably the operating power level of the reversible motor is substantially continuously variable (between lower and upper limits). A control system for the propulsion apparatus may be configured to enable a user to manually select the operating power of the reversible motor, or alternatively, a control system may be configured to enable a user to select a predominant direction of motion of the toy, with the operating power selected automatically by the control system.

The toy may comprise a secondary movement mechanism configured to be actuated by pivoting of the drive member, and which may affect the propulsion direction. The secondary movement mechanism may actuate a secondary directional control element of the toy, which may be for example a rudder or a tail. Alternatively or in addition, the secondary movement mechanism may provide animation to the toy.

There may be provided a toy aeroplane comprising:
an airframe supporting at least one wing;
a propulsion unit pivotally mounted with respect to the airframe, the propulsion unit comprising a propeller having an axis of rotation and a reversible motor coupled to the propeller to rotate the propeller in first and second directions;
wherein operation of the reversible motor to rotate the propeller in the first direction causes the propulsion unit to pivot with respect to the airframe to a first position and provide a propulsion force in a first propulsion direction;
and operation of the reversible motor to rotate the propeller in the second direction causes the propeller to pivot about the airframe to a second position and provide a propulsion force in a second propulsion direction.

There may be provided a flying toy comprising:
a body providing buoyancy to the flying toy;
a propulsion unit pivotally mounted with respect to the body, the propulsion unit comprising a propeller having an axis of rotation and a reversible motor coupled to the propeller to rotate the propeller in first and second directions;
wherein operation of the reversible motor to rotate the propeller in the first direction causes the propulsion unit to pivot with respect to the body to a first position and provide a propulsion force in a first propulsion direction;
and operation of the reversible motor to rotate the propeller in the second direction causes the propeller to pivot about the body to a second position and provide a propulsion force in a second propulsion direction.

The flying toy may be configured as a blimp-type aircraft. Alternatively, the flying toy may be configured as an animal, which may be a swimming animal such as a shark, a fish or a whale, or may be a flying animal such as an insect or bird.

The present invention enables a realistic serpentine or meandering motion to be imparted to the flying toy in use, resembling the movement of a swimming animal or a flying animal, with relatively few component parts, a simple means of control and light weight.

According to a second aspect of the invention, there is provided a method of controlling the motion of a toy, the method comprising:
providing a propulsion apparatus pivotally mounted on a toy, the propulsion apparatus comprising a rotating drive member having an axis of rotation and a reversible motor coupled to the rotating drive member to rotate the drive member in first and second directions;
operating the reversible motor in a first position to rotate the rotating drive member in the first direction to provide a propulsion force in a first propulsion direction;
operating the reversible motor to rotate the rotating drive member in the second direction to cause the rotating drive member to pivot with respect to the toy to a second position, and provide a propulsion force in a second propulsion direction;
characterised in that the first and second propulsion directions are within 90 degrees of one another.

The method may comprise operating the reversible motor to rotate the rotating drive member in the first direction to cause the rotating drive member to pivot with respect to the toy to the first position and provide a propulsion force in a first propulsion direction.

The method may comprise alternately operating the reversible motor to rotate the rotating drive member in the first direction and second directions to cause the rotating drive member to pivot with respect to the toy between the first and second positions and alternately provide a propulsion force in the first and second propulsion directions. Embodiments of the second aspect of the invention may include one or more features of the first aspect of the invention or its embodiments, or vice versa.

There may be provided a system comprising a remote control toy according to the second aspect of the invention and a remote control module, wherein the remote control module provides an interface for user control of the remote control toy.

The system may be configured to enable a user to manually select the periods during which the drive member is driven to rotate in the first and second directions.

The system may be configured to enable a user to select a predominant direction of motion of the toy, and wherein the periods during which the drive member is driven to rotate in the first and second directions are selected automatically by the control system.

Optionally the system is configured to enable a user to manually select the operating power of the reversible motor.

Optionally the system is configured to enable a user to select a predominant direction of motion of the toy, and wherein the operating power of the reversible motor is selected automatically by the control system.

### Brief Description of the Drawings

There will now be described, by way of example only, various embodiments of the invention with reference to the drawings, of which:
Figure 1 is a perspective view of a propulsion apparatus according to a first embodiment of the invention;
Figures 2A and 2B are top views of the propulsion apparatus of Figure 1 in first and second positions respectively;
Figure 3 is perspective view of a toy aircraft comprising the propulsion apparatus of Figure 1;
Figures 4A and 4B are schematic representations showing use of a propulsion apparatus according to an embodiment of the invention in a first aircraft implementation;
Figures 5A and 5B are schematic representations showing use of a propulsion apparatus according to an embodiment of the invention in a second aircraft implementation;
Figures 6A and 6B are schematic representations showing use of a propulsion apparatus according to an embodiment of the invention in a third aircraft implementation;
Figure 7A and 7B are schematic representations showing use of a propulsion apparatus according to an embodiment of the invention in a fourth aircraft implementation;
Figure 8 is a perspective view of a propulsion apparatus according to an alternative embodiment of the invention;
Figure 9 is a perspective view of the propulsion apparatus of Figure 8 mounted to a blimp-type aircraft;
Figures 10A to 10C are schematic representations of the use of the propulsion apparatus of Figure 8 in an application to a blimp-type aircraft;
Figures 11A and 11 B are schematic views representing application of the propulsion apparatus of the invention to a water-borne vehicle;
Figure 12A is a side view of a wheeled vehicle comprising a propulsion apparatus according to an alternative embodiment of the invention;
Figure 12B is an enlarged perspective view of the propulsion apparatus of the vehicle in Figure 12A; and
Figures 13A and 13B are schematic representations of the use of the propulsion apparatus and the wheeled vehicle of Figures 12A and 12B.

### Detailed Description of Preferred Embodiments

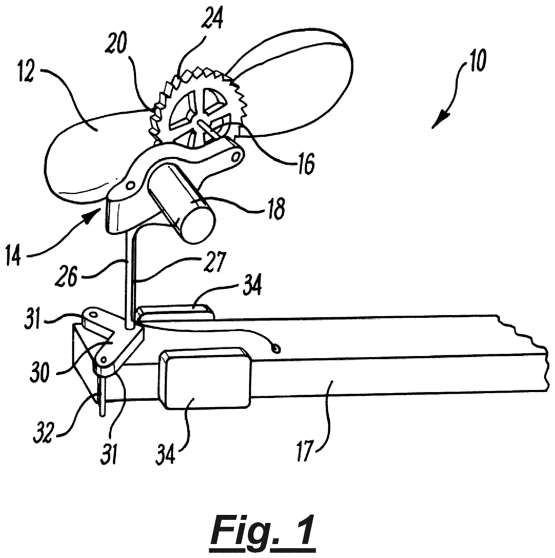

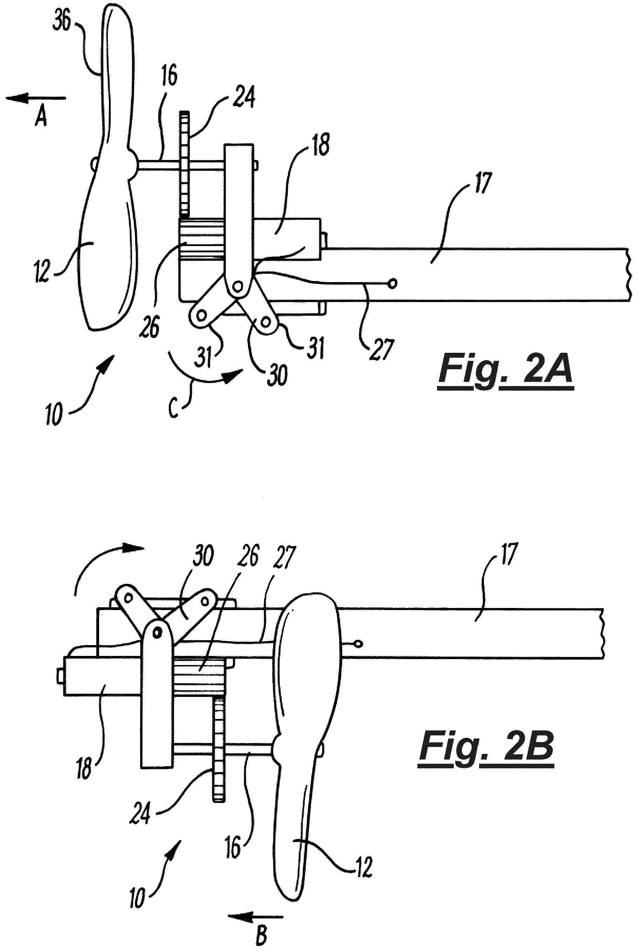

Referring firstly to Figures 1, 2A and 2B, there is shown a propulsion apparatus in accordance with a first embodiment of the invention, generally depicted at 10. The propulsion apparatus 10 comprises a propeller 12 coupled to a drive assembly 14 via a propeller shaft 16. In this embodiment, the propulsion apparatus 10 is configured for use on a toy aeroplane, and therefore the propeller 12 is selected to provide a thrust force for an aeroplane. The propeller 12 of this embodiment is formed as a rigid single unit with a permanent blade twist to generate a thrust.

The drive assembly 14 comprises a reversible electric motor 18 controlled remotely via a control cable 27 coupled to a receiver (not shown). The electric motor is reversible and is therefore capable of running the propeller in a clockwise or anti-clockwise direction, dependent on polarity of a current signal to the motor. The motor drives a gearing mechanism 20 which comprises a gear cog 24 and a pinion cog 26 selected to provide a suitable ratio of torque and revolution speed for the propeller according to the operational parameters of the motor 18.

The propeller 12 and drive assembly 14 are mounted to a support member 17 by a mounting shaft 28, which is pivotally mounted on the support member 17. The propeller and drive assembly are rotationally keyed with the mounting shaft 28 such that pivoting of the shaft on the support assembly causes the propeller 12 and drive assembly 14 to be pivoted with respect to the support member 17. The apparatus also comprises a stop assembly 30 which functions to limit the pivoting of the propeller 12 and drive assembly 14 about the support member 17. The stop assembly 30 comprises a pair of laterally extending beams 31 which support stop rods 32. The stop rods 32 are arranged to abut against stop surfaces 34 provided on opposing sides of the support member 17.

In this example, when the motor 18 and propeller 12 are driven to rotate in a first rotational direction (e.g. clockwise), the propulsion unit generates a forward thrust in the direction A, to which the surface 36 of the propeller faces (i.e. away from the propeller shaft side). In the position shown in Figure 2A, this is a forward thrust to the propulsion apparatus. This thrust causes a thrust reaction force on the propulsion apparatus 10, which pivots the propulsion apparatus with respect of the support member 17 on the mounting shaft in the direction shown by arrow C. The propulsion unit pivots to a pre-determined stop position defined by the abutment of the stop assembly (specifically the rod 32) and the stop surface 34. In this position, the resultant thrust of the propulsion apparatus is in a first propulsion direction. The position of the pivot and propulsion unit maintained by the thrust reaction force and the stop mechanism 30.

In a second mode of operation, the motor and propeller are driven in a second rotational direction (e.g. anti-clockwise). This causes the propeller to generate a thrust in the opposing direction, in this case in the direction B, away from the surface 38 of the propeller (i.e. on the propeller shaft side). The initial effect of the change in thrust direction is to generate an opposing thrust reaction force to cause the propeller 12 and drive assembly 14 to pivot until the stop assembly 30 abuts stop surfaces 34 on the opposing side of the support member 17. This position is shown in Figure 2B. In this position the resultant thrust of the propulsion apparatus and the propulsion direction is in a second propulsion direction.

It will be apparent from the above description that the propulsion apparatus generates an overall thrust in the same general direction, regardless of the rotational direction of the motor. This is achieved by the pivoting of elements of the propulsion apparatus (and in particular the propeller which generates the thrust) to reverse the thrust direction.

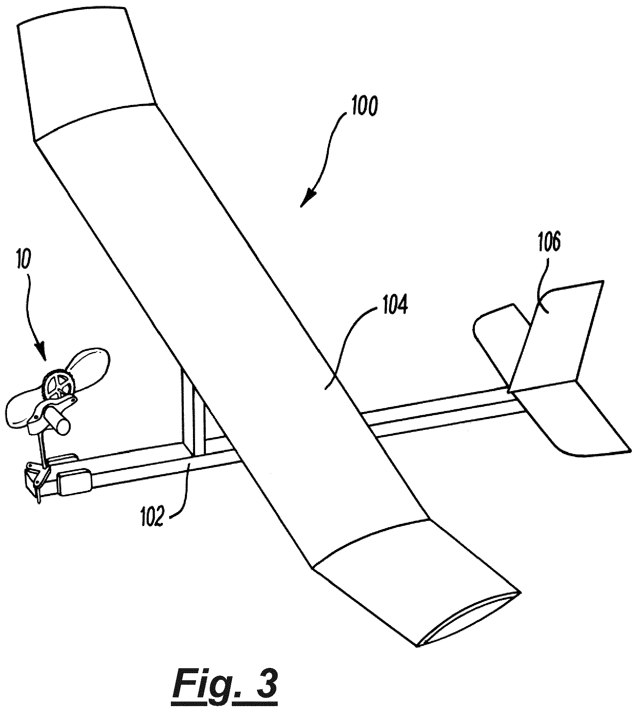

Figure 3 is a perspective view of a toy aeroplane apparatus incorporating the propulsion unit 10 of Figures 1 and 2. The toy aeroplane, generally shown at 100, comprises an airframe 102, a fixed wing 104 mounted on the airframe, and a tail and rudder assembly generally shown at 106. The propulsion apparatus 10 is mounted to a forward portion of the airframe 102. In this embodiment, the support member of the propulsion apparatus forms part of the airframe itself, although it will be appreciated that in alternative embodiments a support unit may be a separate component which is joined to coupled to (or otherwise integrated with) an airframe. The toy aeroplane apparatus also comprises a power supply and a remote control receiver unit (not shown).

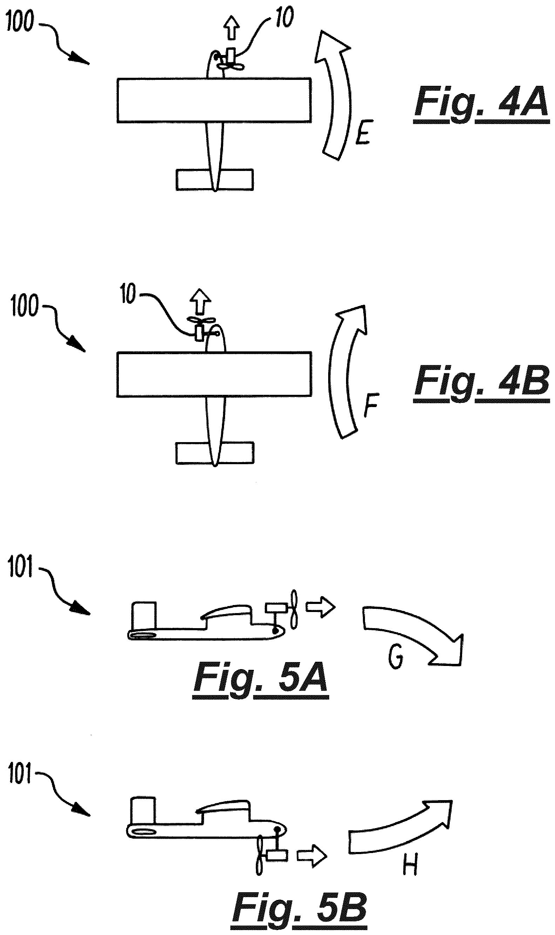

Figures 4A and 4B schematically show how the propulsion unit 10 may be used to provide yaw control of the aircraft 100. Figures 4A and 4B show the aircraft 100 from above. In Figure 4A the propulsion unit 10 is driven to rotate in the first direction to generate a thrust from the surface 36 of the propeller. In this position, the motor torque and tail trim are configured to provide a slight turning radius to the aeroplane to the left, as indicated by the arrow E. Therefore in this mode of operation the rotation of the motor propels the aircraft in a forward direction with a left turn.

When the motor direction is reversed, the thrust direction from the propeller is also reversed. This causes the propulsion unit to be rotated to a second position as shown in Figure 4B (as described in more detail above). In this position, the propulsion unit propels the aeroplane generally in a forward direction but the motor torque and tail trim are configured to impart a slight turning radius to the right, as indicated by the arrow F.

The propulsion apparatus of this embodiment therefore enables the flight path to be varied simply by reversing the direction of the motor. Alternating the direction of the motor allows the aircraft to follow a serpentine or meandering flight path. By varying the periods during which the motor is run in the first and second directions, the aeroplane can be provided with directional control. By providing alternating periods of motor direction, a predominantly straight flight path can be achieved by means of the simple control mechanism. Varying the power to the motor causes a variation to the turning radius, with increased power decreasing the turning radius. Therefore directional control can be provided by adjusting the power to the motor to provide a tighter or less tight turning radius during operation.

Although the embodiment of Figures 4A and 4B is described in the context of yaw control, it will be appreciated that the principles of the invention may also be used to provide pitch control to a toy aeroplane. An example embodiment is described with reference to Figures 5A and 5B, which show a toy aeroplane apparatus generally shown at 101 having a propulsion apparatus 10 mounted at a forward portion of the airframe. The propulsion apparatus 10 will be understood from the description accompanying Figures 1 and 2 above. In this embodiment, the propulsion unit is mounted to pivot about a substantially horizontal mounting axis on the airframe, in contrast to the vertical axis of the previous embodiment. The propulsion unit is operated to pivot between first and second positions, as shown in Figure 5A and Figure 5B respectively. In Figure 5A, the motor torque, lift and tail trim are configured to provide a slight downward pitch to the aeroplane, as indicated by the arrow G. Therefore in this mode of operation the rotation of the motor propels the aircraft in a forward direction with a down pitch. In Figure 5B, both the rotational direction of the propeller and orientation of the propeller have been reversed, such that resulting thrust is in the same predominantly forward directions. However, the motor torque, lift and tail trim are configured to provide a slight upward pitch to the aeroplane, as indicated by the arrow H. Therefore in this mode of operation the rotation of the motor propels the aircraft in a forward direction with an up pitch.

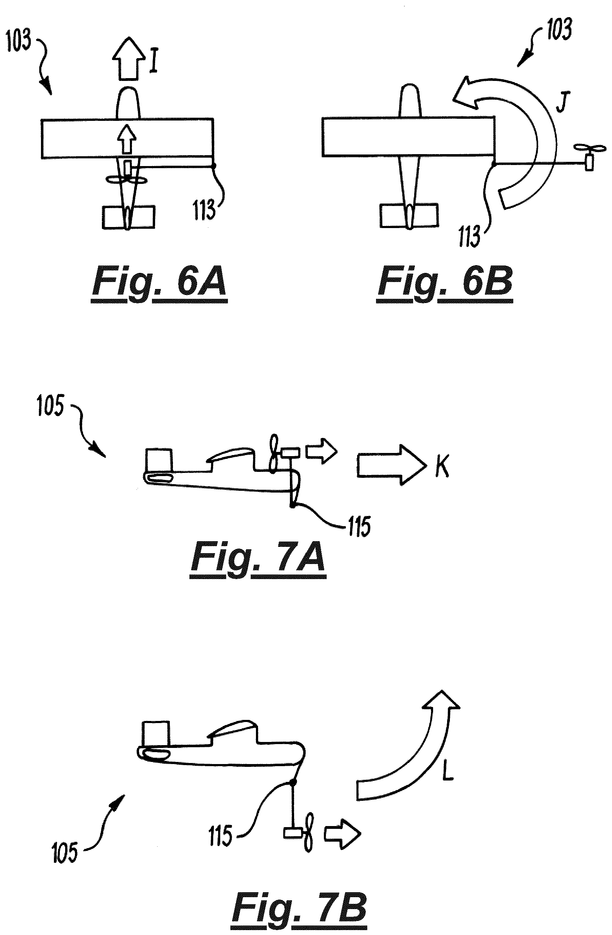

Other implementations of the propulsion unit are within the scope of the invention, and Figures 6 and to 7 illustrate alternative configurations. Figures 6A and 6B show a toy aeroplane apparatus generally shown at 103 having a propulsion apparatus, the operation of which will be understood from the description accompanying Figures 1 and 2 above. In this embodiment, the propulsion unit is mounted to pivot about pivot point 113 having a substantially vertical mounting axis on the aeroplane 103, similar to the embodiment of Figure 3. However, in contrast to the previously described embodiment, the propulsion unit is pivotally mounted at a position 113 a distance away from a central longitudinal axis of the aeroplane. In the position shown in Figure 6A, the propulsion unit is located in a substantially central position on the aeroplane, and the motor torque, lift and tail trim are configured to provide a substantially straight flight path to the aeroplane, as indicated by the arrow I.

In Figure 6B, both the rotational direction of the propeller and orientation of the propeller have been reversed, such that resulting thrust is in the same predominantly forward direction. However, with the pivot mounting to one side of the central axis, the second position of the propulsion unit as shown in Figure 6B is considerably offset from the central axis. In this position, the motor torque and tail trim are configured to provide an extreme yaw to the aeroplane, as indicated by the arrow J, resulting in a rotary flight path.

Figures 7A and 7B show a toy aeroplane apparatus generally shown at 105 having a propulsion apparatus, the operation of which will be understood from the description accompanying Figures 1 and 2 above. In this embodiment, the propulsion apparatus is mounted to pivot about a pivot point 115 having a substantially horizontal mounting axis on the aeroplane, similar to the embodiment of Figures 5A and 5B. However, in contrast to the previously described embodiment, the propulsion unit is pivotally mounted at a position a distance away from the central longitudinal axis of the aeroplane. In the position shown in Figure 7A, the propulsion unit is located in a substantially central position on the aeroplane, and the motor torque, lift and tail trim are configured to provide a substantially straight flight path to the aeroplane, as indicated by the arrow K. In Figure 7B, with the pivot mounting in a low position with respect to the central axis, the second position of the propulsion unit as is considerably offset from the central axis. In this position, the motor torque, lift and tail trim are configured to provide an extreme pitch to the aeroplane 105, as indicated by the arrow L, resulting in a looping flight path.

The invention has application to flying toys and aircraft other than the toy aeroplanes described above, and there will now be described an application to a blimp-type aircraft which uses lighter-than-air gas to provide the aircraft with buoyancy in air.

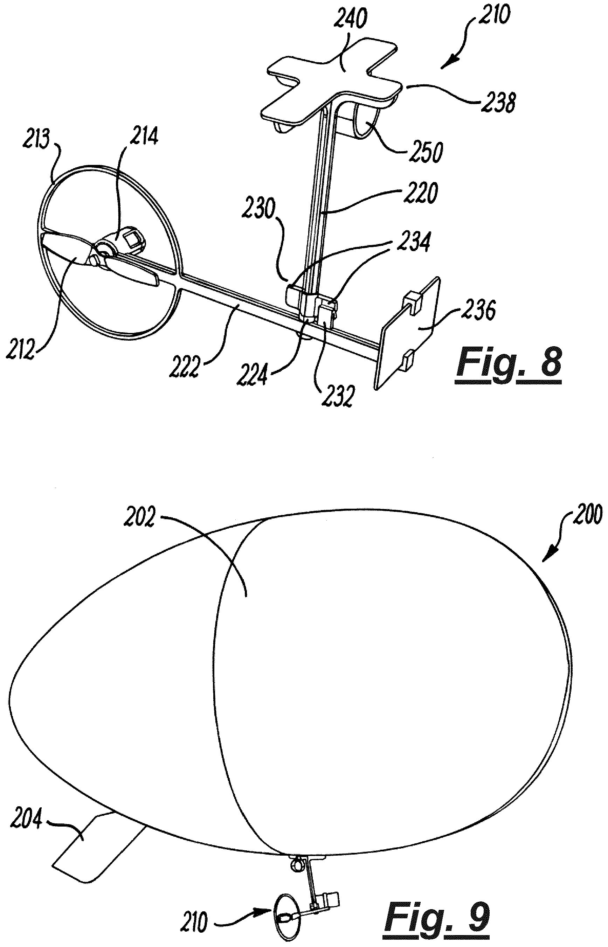

Figure 8 is a perspective view of a propulsion unit generally shown at 210 which may be applied to a blimp-type aircraft or other flying toy. The propulsion unit 210 is similar to propulsion apparatus 10, and will be understood from Figures 1 and 2 and the accompanying description. The propulsion unit 210 comprises a propeller 212 which is a rigid fixed propeller with permanent blade twist, surrounded by a protection ring 213. A drive assembly 214 comprising a reversible motor 218 and integrated power supply (not shown) is directly coupled to the propeller to enable it to be driven in first and second directions to generate thrust from either of its faces depending on the drive direction.

The drive assembly 214 is joined to a mounting shaft 220 by a support arm 222. The support arm 222 is able to pivot with respect to the mounting shaft about pivot point 224, within limits defined by a stop mechanism 230. The stop mechanism comprises a tab 232 attached to the support arm 222, and a pair of stop plates 234 secured to the mounting shaft 222. The support arm is capable of rotating with respect to the mounting shaft by up to approximately 180 degrees.

At an end of the support arm 222 opposed from the drive assembly 214 is a printed circuit board (PCB) 236 which provides the receiver and control circuitry for the propulsion unit.

An upper end 238 of the mounting shaft 220 is provided with an attachment pad 240 which permits the propulsion unit 210 to be mounted to a flying toy. A ballast ring 250 is located towards the upper end 238 of the mounting shaft 220.

Figure 9 is a perspective view of the propulsion unit 210 mounted to the underside of a blimp-type flying toy 200. The toy 200 comprises a body 202 containing a lighter-than-air gas which provides buoyancy to the toy, and a tail 204 on the body.

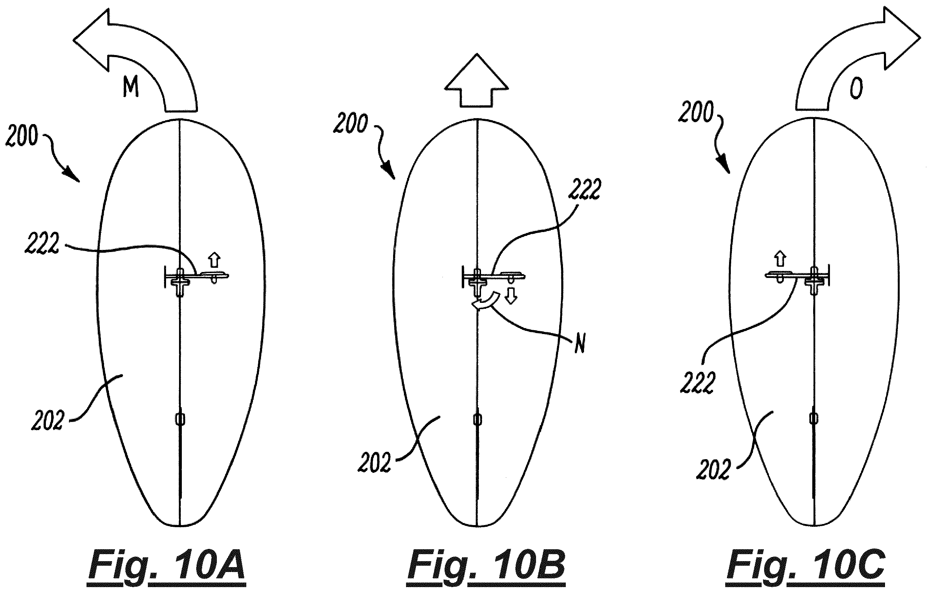

Operation of the flying toy 200 will now be described with reference to Figures 10A to 10C, which are respectively views of the flying toy 200 from below in different operational positions. Figure 10A shows the propulsion unit 210 in a first position, in which the propeller is rotated in a first direction (e.g. clockwise) to generate a thrust force to the toy in a forward direction. The rotational position of the support arm 222 is determined by the abutment of the tab 232 and the stop plates 234. In this position the motor torque and trim are configured to provide a left turn to the toy 200 as it moves forwards, as shown by the arrow M. Elevation is provided to the toy by virtue of the thrust force being provided below the centre of lift of the apparatus.

In Figure 10B, the propeller has reversed rotational direction, thereby reversing the thrust direction and causing the support arm to rotate about the mounting shaft around the pivot, in the direction of the arrow N. The toy 200 continues to drift forwards as the drive assembly 214 is pivoted through 180 degrees until the tab 232 abuts the stop plates 234. In this position, as shown in Figure 10C, the thrust is again directed forwards to propel the toy in a forward direction. However, in the position shown in Figure 10C the motor torque and trim are configured to provide a right turn to the toy 200 as it moves forwards indicated by the arrow O. Again, elevation is provided to the toy by virtue of the thrust force being provided below the centre of lift of the apparatus.

As with the previously described embodiments, the propulsion unit enables the flight path to be varied simply by reversing the direction of the motor. Alternating the direction of the motor allows the aircraft to follow a serpentine or meandering flight path, and by varying the periods during which the motor is run in the first and second directions, the aircraft can be provided with directional control. The invention facilitates the production of a toy which simulates the movement of a swimming animal such as a shark or a fish, or a flying animal such as an insect or bird. Embodiments of the invention may be configured to have the appearance of swimming animals or flying animals rather than the vehicles shown in the drawings.

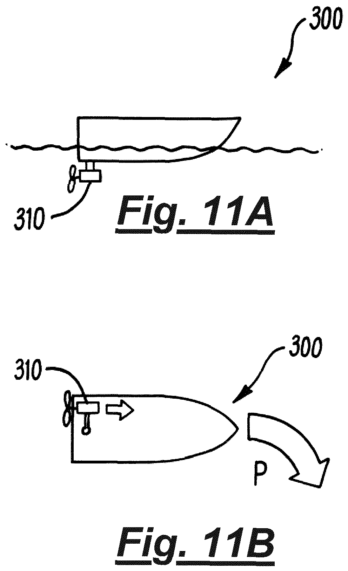

The above-described embodiments of the invention relate to remote-control toy aircraft implementations, but it will be appreciated that the invention also has application to the control of vehicles of other types. Figures 11A and 11 B show schematically the application of a propulsion apparatus 310 according to an aspect of the invention to a waterborne vessel 300. The propulsion apparatus 310 is configured as a water propeller, and is provided with a reversible drive motor. The propulsion apparatus 310 is pivotally mounted on the hull of the vessel to allow the orientation of the propeller to be adjusted between two thrust positions, as will be understood from the previously described embodiments. Figure 11 B shows the propulsion apparatus 310 in a first position in which it provides the vessel with a forward thrust with a right turn, as indicated by the arrow P. The propulsion apparatus 310 may also be pivoted to a second position (not shown) in which a propulsion force is provided in a different direction (e.g. a left turn).

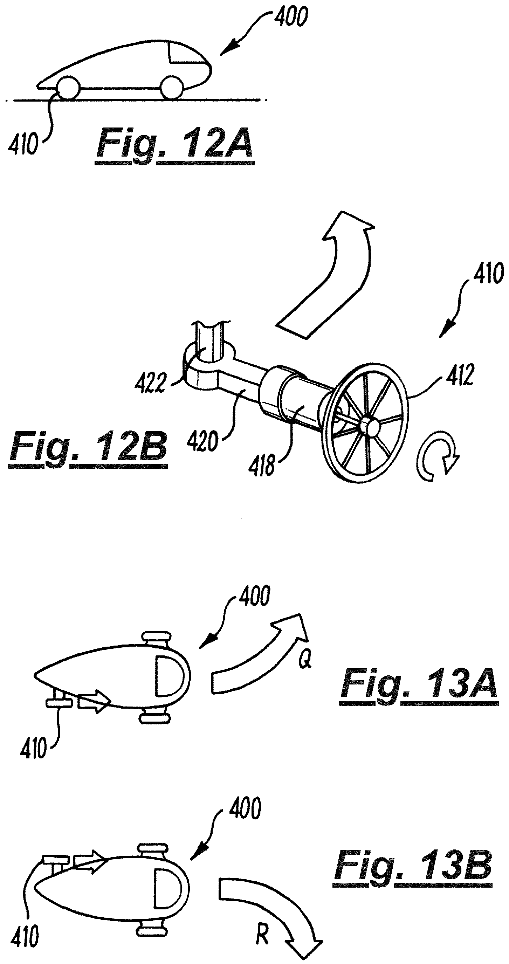

Figures 12A and 12B schematically show an application to a wheeled vehicle, generally depicted at 400. The propulsion apparatus 410, shown enlarged in Figure 12B, comprises a wheel 412 and a reversible motor 418 configured to drive the wheel. The motor and wheel are mounted to a support arm 420 which is pivotally attached to the vehicle 400 by a vertically-oriented pivot 422. As with the previous embodiments, the support arm 420 is capable of pivoting between two pre-determined positions defined by a pivot stop mechanism (not shown).

Figures 13A and 13B schematically show how the propulsion apparatus 410 may be used to provide directional control of the vehicle 400. In Figure 13A the propulsion apparatus 410 is driven to rotate in the first direction to generate a drive force with a slight turning radius to the aeroplane to the left, as indicated by the arrow Q. Therefore in this mode of operation the rotation of the motor propels the vehicle in a forward direction with a left turn. When the motor direction is reversed, the drive direction of the wheel is also reversed. This causes the propulsion unit to be rotated to a second position as shown in Figure 13B.

In this position, the wheel propels the aeroplane generally in a forward direction with a slight turning radius to the right, as indicated by the arrow R.
Applications to other vehicle types are also within the scope of the invention, and include remote controlled submarine vessels.
Further non-illustrated embodiments of the invention may be configured to include secondary directional control mechanisms actuated by movement of the drive assembly between first and second positions. In one such arrangement, the pivoting of the drive member of the propulsion unit by changing the direction of the motor adjusts the position of the centre of gravity of the apparatus and has a direct effect on the pitch or bank of an aircraft in flight. In another configuration, pivoting of the drive member of the propulsion is coupled to the movement of an additional directional element of an apparatus, such as movement of a rudder or raising or lowering of landing gear. The additional motion may be of a functional nature (as in the case of a rudder or landing gear), or may be simply for additional animation to the toy. For example, on a fish-like blimp implementation, each time the drive mechanism changes position, it could cause fins mounted on the body to flap up and down. On a boat implementation, the change in position could actuate a small figurine changing position of a steering wheel, or mimicking a rowing motion. Other variations are within the scope of the invention.

The invention provides a propulsion apparatus for a toy. The propulsion apparatus comprises a rotating drive member having an axis of rotation, and a reversible motor coupled to the rotating drive member to rotate the drive member in first and second directions. A mounting arrangement is configured to pivotally mount the rotating drive member onto a toy about a mount axis, and at least one pivot stop mechanism is provided. The apparatus is configured such that operation of the reversible motor to rotate the drive member in the first direction causes the drive member to pivot about the mount axis to a first position defined by the at least one pivot stop mechanism and provide a propulsion force in a first propulsion direction. Operation of the reversible motor to rotate the drive member in the second direction causes the drive member to pivot about the mount axis to a second position defined by the at least one pivot stop mechanism and provide a propulsion force in a second propulsion direction, the first and second propulsion directions being both in a general, predominant direction and within 90 degrees of one another. The invention has application to flying toys, vehicles and vessels.

The invention delivers a number of benefits over convention control mechanisms used in the toy industry. For example, a toy equipped with the propulsion unit of the present invention can turn in two directions, which provides improved control compared existing solutions in which propeller speed is simply varied to control the turning radius of a single circle. The propulsion unit does not require an articulated propeller, and therefore has increased durability coupled with reduced weight and cost. Propellers used in embodiments of the invention can have permanent blade twist to increase thrust compared with articulated propeller systems. In addition, the present invention when applied to aircraft allows an airframe that is very stable in roll can be used, as it does not rely on roll-yaw coupling to turn. Furthermore, embodiments of the present invention can be used on buoyant craft such as blimps and boats (where since roll-yaw coupling does not exist). The invention can also be used to control pitch of an aircraft by changing the orientation of the pivot, which is this is not possible when relying on the torque reaction systems of the prior art.

## Claims

1. A propulsion apparatus (10, 210, 310, 410) for a toy (100, 101, 103, 105, 200, 300, 400) the propulsion apparatus comprising:
a rotating drive member (12, 212) having an axis of rotation;
a reversible motor (18, 218, 418) coupled to the rotating drive member (12, 212) to rotate the drive member (12, 212) in first and second directions;
a mounting arrangement configured to pivotally mount the rotating drive member (12, 212) onto a toy (100, 101, 103, 105, 200, 300, 400) about a mount axis; and
at least one pivot stop mechanism (30, 232);
wherein the apparatus (10, 210, 310, 410) is configured such that operation of the reversible motor (18, 218, 418) to rotate the drive member (12, 212) in the first direction causes the drive member (12, 212) to pivot about the mount axis to a first position defined by the at least one pivot stop mechanism (30, 232) and provide a propulsion force in a first propulsion direction;
and wherein operation of the reversible motor (18, 218, 418) to rotate the drive member (12, 212) in the second direction causes the drive member to pivot about the mount axis to a second position defined by the at least one pivot stop mechanism (30, 232) and provide a propulsion force in a second propulsion direction;
**characterised in that** the first and second propulsion directions are within 90 degrees of one another, so that in both the first and second positions the rotating drive member provides an overall thrust for the toy in the same general direction.

2. The propulsion apparatus (10, 210, 310, 410) according to claim 1, wherein the reversible motor (18, 218, 418) and rotating drive member (12, 212) form a drive assembly (14, 214), and the drive assembly is configured to be pivotally mounted on the toy.

3. The propulsion apparatus (10, 210, 310, 410) according to any preceding claim, wherein the mount axis is substantially perpendicular to the axis of rotation.

4. A toy (100, 101, 103, 105, 200, 300, 400) comprising the propulsion apparatus according to any preceding claim.

5. The toy (100, 101, 103, 105, 200, 300, 400) according to claim 4, wherein the first and second propulsion directions are both in the same predominant direction.

6. The toy (100, 101, 103, 105, 200, 300, 400) according to either of claim 4 or 5, wherein the first and second propulsion directions are non-parallel and/or impart a turn radius to the toy.

7. The toy (100, 101, 103, 105, 200, 300, 400) according to any of claims 4 to 6, comprising a secondary movement mechanism configured to be actuated by pivoting of the drive member (12, 212).

8. The toy (100, 101, 103, 105, 200, 300, 400) according to claim 7, wherein the secondary movement mechanism affects the propulsion direction and/or actuates a secondary directional control element of the toy.

9. A system comprising a toy (100, 101, 103, 105, 200, 300, 400) according to any of claims 4 to 8 and a remote control module, wherein the toy is a remote control toy and the remote control module provides an interface for user control of the remote control toy.

10. A method of controlling the motion of a toy, the method comprising:
providing a propulsion apparatus (10, 210, 310, 410) according to claim 1 and pivotally mounted on a toy (100, 101, 103, 105, 200, 300, 400); operating the reversible motor (18, 218, 418) in the first position to rotate the rotating drive member (12, 212) in the first direction to provide a propulsion force in the first propulsion direction;
operating the reversible motor (18, 218, 418) to rotate the rotating drive member (12, 212) in the second direction to cause the rotating drive member (12, 212) to pivot with respect to the toy (100, 101, 103, 105, 200, 300, 400) to the second position, and provide a propulsion force in the second propulsion direction.

11. The method according to claim 10, comprising operating the reversible motor (18, 218, 418) to rotate the rotating drive member (12, 212) in the first direction to cause the rotating drive member (12, 212) to pivot with respect to the toy (100, 101, 103, 105, 200, 300, 400) to the first position and provide a propulsion force in the first propulsion direction.

12. The method according to either of claims 10 or 11, comprising alternately operating the reversible motor (18, 218, 418) to rotate the rotating drive member (12, 212) in the first and second directions to cause the rotating drive member (12, 212) to pivot with respect to the toy between the first and second positions and alternately provide a propulsion force in the first and second propulsion directions.

13. The method according to any of claims 10 to 12, wherein the first and second propulsion directions are non-parallel and/or impart a serpentine or meandering motion to the toy (100, 101, 103, 105, 200, 300, 400) and/or impart a turn radius to the toy in one or both of the first and second positions.

14. The method according to any of claims 10 to 13, comprising operating a secondary movement mechanism configured to be actuated by pivoting of the drive member (12, 212).

15. The method according to claim 14, wherein the secondary movement mechanism affects the propulsion direction and/or a secondary directional control element of the toy (100, 101, 103, 105, 200, 300, 400).

## Patentansprüche

1. Eine Antriebsvorrichtung (10, 210, 310, 410) für ein Spielzeug (100, 101, 103, 105, 200, 300, 400), die folgendes umfasst:
ein rotierendes Antriebselement (12, 212) mit einer Rotationsaxe;
einen mit dem rotierenden Antriebselement (12, 212) verbundenen Reversiermotor (18, 218, 418) zum Rotieren des Antriebselements (12, 212) in die erste und die zweite Richtung;
eine Befestigungsvorrichtung, mit der das rotierende Antriebselement (12, 212) an ein Spielzeug (100, 101, 103, 105, 200, 300, 400) um eine Halteachse befestigt wird; und
mindestens einen Schwenk-Sperrmechanismus (30, 232);
bei dem die Vorrichtung (10, 210, 310, 410) so konfiguriert ist, dass der Betrieb des Reversiermotors (18, 218, 418) zum Rotieren des Antriebselements in die erste Richtung (12, 212) verursacht, dass das Antriebselement (12, 212) um die Halteachse bis zu einer ersten Position, die von mindestens einem Schwenk-Sperrmechanismus (30, 232) definiert wird, schwenkt und für eine Antriebskraft in einer ersten Antriebsrichtung sorgt;
und bei dem der Betrieb des Reversiermotors (18, 218, 418) zum Rotieren des Antriebselements (12, 212) in die zweite Richtung verursacht, dass das Antriebselement um die Halteachse bis zu einer zweiten Position, die von mindestens einem Schwenk-Sperrmechanismus (30, 232) definiert wird, schwenkt und für eine Antriebskraft in einer in einer zweiten Antriebsrichtung sorgt;
gekennzeichnet davon, dass die erste und die zweite Antriebsrichtung maximal 90 Grad Unterschied haben, so dass die erste und die zweite Position des rotierendes Antriebselements eine allgemeine Schubkraft für das Spielzeug in die generell selbe Richtung liefern.

2. Die Antriebsvorrichtung (10, 210, 310, 410) nach Anspruch 1,
bei der der Reversiermotor (18, 218, 418) und das rotierende Antriebselement (12, 212) eine Antriebseinheit (14, 214) bilden und die Antriebseinheit so eingerichtet ist, dass sie schwenkbar an das Spielzeug montiert wird.

3. Die Antriebsvorrichtung (10, 210, 310, 410) nach einem der vorgehenden Ansprüche, bei der die Halteachse deutlich senkrecht zur Rotationsaxe steht.

4. Ein Spielzeug (100, 101, 103, 105, 200, 300, 400) einschließlich einer Antriebsvorrichtung nach einem der vorgehenden Ansprüche.

5. Das Spielzeug (100, 101, 103, 105, 200, 300, 400) nach Anspruch 4, wobei die erste und die zweite Antriebsrichtung beide in die vorherrschende Richtung leiten.

6. Das Spielzeug (100, 101, 103, 105, 200, 300, 400) nach entweder Anspruch 4 oder Anspruch 5, wobei die erste und die zweite Antriebsrichtung nicht parallel sind und/oder dem Spielzeug einen Wendekreis verleihen.

7. Das Spielzeug (100, 101, 103, 105, 200, 300, 400) nach einem der Ansprüche 4 bis 6, einschließlich eines zweiten Bewegungsmechanismus, der konfiguriert wurde, um mit dem Schwenken des Antriebselements (12, 212) in Bewegung gesetzt zu werden.

8. Das Spielzeug (100, 101, 103, 105, 200, 300, 400) nach Anspruch 7, bei dem der zweite Bewegungsmechanismus die Antriebsrichtung beeinflusst und/oder ein sekundäres Richtungs-Kontrollelement des Spielzeugs in Bewegung setzt.

9. Ein System, einschließlich eines Spielzeugs (100, 101, 103, 105, 200, 300, 400) nach einem der Ansprüche 4 bis 8 und ein Fernsteuermodul, wobei das Spielzeug ein ferngesteuertes Spielzeug ist und das Fernsteuermodul eine Schnittstelle für die Benutzerkontrolle des ferngesteuerten Spielzeugs bietet.

10. Eine Methode der Kontrolle der Bewegungen des Spielzeugs, die folgendes umfasst:
eine Antriebsvorrichtung (10, 210, 310, 410) nach Anspruch 1 und schwenkbar an ein Spielzeug (100, 101, 103, 105, 200, 300, 400) befestigt ist, vorsehend,
den Betrieb des Reversiermotors (18, 218, 418) in der ersten Position zum Rotieren des rotierendes Antriebselements (12, 212) in die erste Richtung, um eine Schubkraft in die erste Antriebsrichtung zu liefern;
der Betrieb eines Reversiermotors (18, 218, 418) zum Rotieren des rotierenden Antriebselements (12, 212) in die zweite Richtung, um das rotierende Antriebselement (12, 212) im Verhältnis zum Spielzeug (100, 101, 103, 105, 200, 300, 400) zur zweiten Position zu schwenken und für eine Antriebskraft in die zweite Antriebsrichtung zu sorgen.

11. Das Verfahren nach Anspruch 10, einschließlich des Betriebs eines Reversiermotors (18, 218, 418) zum Rotieren des rotierenden Antriebselements (12, 212) in die erste Richtung, um das rotierende Antriebselement (12, 212) im Verhältnis zum Spielzeug (100, 101, 103, 105, 200, 300, 400) zur ersten Position zu schwenken und für eine Antriebskraft in die erste Antriebsrichtung zu sorgen.

12. Das Verfahren nach einem der Ansprüche 10 oder 11, einschließlich des abwechselnden Betriebs eines Reversiermotors (18, 218, 418) zum Rotieren des rotierenden Antriebselements (12, 212) in die erste und die zweite Richtung, um das rotierende Antriebselement (12, 212) im Verhältnis zum Spielzeug zwischen der ersten Position und der zweiten Position zu schwenken und für eine Antriebskraft in die erste und die zweite Antriebsrichtung zu sorgen.

13. Das Verfahren nach einem der Ansprüche 10 bis 12, bei dem die erste und die zweite Antriebsrichtung nicht parallel sind oder dem Spielzeug (100, 101, 103, 105, 200, 300, 400) eine serpentinenförmige oder mäandrische Bewegung übertragen und/oder dem Spielzeug einen Wendekreis in eine oder beide der ersten und der zweiten Position übertragen.

14. Das Verfahren nach einem der Ansprüche 10 bis 13, einschließlich des Betriebs eines zweiten Bewegungsmechanismus, der konfiguriert wurde, um mit dem Schwenken des Antriebselements (12, 212) in Bewegung gesetzt zu werden.

15. Das Verfahren nach Anspruch 14, bei dem der zweite Bewegungsmechanismus die Antriebsrichtung und/oder ein sekundäres Richtungs-Kontrollelement des Spielzeugs (100, 101, 103, 105, 200, 300, 400) beeinflusst.

## Revendications

1. Un appareil de propulsion (10, 210, 310, 410) pour un jouet (100, 101, 103, 105, 200, 300, 400), l'appareil de propulsion comprenant :
un organe de rotation (12, 212) avec un axe de rotation ;
un moteur réversible (18, 218, 418) accouplé à l'organe de rotation (12, 212) pour faire tourner l'organe de rotation (12, 212) dans une première et dans une seconde directions ;
un dispositif configuré pour monter l'organe de rotation (12, 212) sur un jouet (100, 101, 103, 105, 200, 300, 400) autour d'un axe de montage ; et
au moins un mécanisme d'arrêt de rotation (butée) (30, 232) ;
dans laquelle l'appareil (10, 210, 310, 410) est configuré pour que le fonctionnement du moteur réversible (18, 218, 418) faisant tourner l'organe de commande (12, 212) dans la première direction, fasse pivoter l'organe de commande (12, 212) autour de l'axe de montage sur une première position définie par au moins un mécanisme d'arrêt de rotation (butée) (30, 232) et fournisse une force de propulsion dans une première direction ;
et dans laquelle le fonctionnement du moteur réversible (18, 218, 418) pour faire tourner l'organe de commande (12, 212) dans la seconde direction, fasse pivoter l'organe de commande autour de l'axe de montage sur une seconde position définie par au moins un mécanisme d'arrêt de rotation (butée) (30, 232) et afin de fournir une force de propulsion dans une seconde direction ;
**caractérisée par le fait que** la première et la seconde directions de propulsion sont perpendiculaires l'une par rapport à l'autre, afin que, sur la première et la seconde positions l'organe de commande de rotation fournisse une poussée globale pour le jouet dans la même direction générale.

2. L'appareil de propulsion (10, 210, 310, 410) conforme à la revendication 1 dans lequel le moteur réversible (18, 218, 418) et l'organe de commande de rotation (12, 212) forment un ensemble d'entraînement (14, 214), et l'ensemble d'entraînement est configuré pour être monté sur le jouet en le faisant pivoter.

3. L'appareil de propulsion (10, 210, 310, 410) conforme à l'une des revendications précédentes, dans lequel l'axe de montage est perpendiculaire à l'axe de rotation.

4. Un jouet (100, 101, 103, 105, 200, 300, 400) comprenant l'appareil de propulsion conforme à l'une des revendications précédentes.

5. Le jouet (100, 101, 103, 105, 200, 300, 400) conforme à la revendication 4, dans lequel la première et la seconde directions de propulsion sont toutes les deux dans la même direction.

6. Le jouet (100, 101, 103, 105, 200, 300, 400) conforme à la revendication 4 ou 5, dans lequel la première et la seconde directions de propulsion ne sont pas parallèles et/ou imposent un rayon de virage au jouet.

7. Le jouet (100, 101, 103, 105, 200, 300, 400) conforme à l'une des revendications 4 à 6, comprenant un mécanisme de mouvement secondaire configuré pour être actionné par la rotation de l'organe de commande (12, 212).

8. Le jouet (100, 101, 103, 105, 200, 300, 400) conforme à la revendication 7, dans lequel le mécanisme de mouvement secondaire affecte la direction de propulsion et/ou actionne un élément secondaire de commande de direction du jouet.

9. Un système comprenant un jouet (100, 101, 103, 105, 200, 300, 400) conforme à l'une des revendications 4 à 8 et un module de télécommande, dans lequel le jouet est un jouet télécommandé et dans lequel le module de télécommande comporte une interface permettant à l'utilisateur de télécommander le jouet.

10. Une méthode pour diriger le mouvement d'un jouet, la méthode comprenant :
installer un appareil de propulsion (10, 210, 310, 410) conforme à la revendication 1 et monté de façon pivotante sur un jouet (100, 101, 103, 105, 200, 300, 400),
faire fonctionner le moteur réversible (18, 218, 418) dans la première position pour faire tourner l'organe de commande de rotation (12, 212) dans la première direction afin de fournir une force de propulsion dans la première direction ;
faire fonctionner le moteur réversible (18, 218, 418) pour faire tourner l'organe de commande de rotation (12, 212) dans la seconde direction afin que l'organe de commande de rotation (12, 212) pivote par rapport au jouet (100, 101, 103, 105, 200, 300, 400) sur la seconde position, et afin de fournir une force de propulsion dans la seconde direction.

11. La méthode conforme à la revendication 10, consistant à faire fonctionner le moteur réversible (18, 218, 418) pour faire tourner l'organe de commande de rotation (12, 212) dans la première direction pour faire pivoter l'organe de commande de rotation (12, 212) par rapport au jouet (100, 101, 103, 105, 200, 300, 400) sur la première position, et afin de fournir une force de propulsion dans la première direction.

12. La méthode conforme à l'une des revendications 10 ou 11, consistant à faire fonctionner alternativement le moteur réversible (18, 218, 418) pour faire tourner l'organe de commande de rotation (12, 212) dans la première et dans la seconde directions afin que l'organe de commande de rotation (12, 212) pivote par rapport au jouet (100, 101, 103, 105, 200, 300, 400) entre la première et la seconde position, et afin de fournir en alternance une force de propulsion dans la première et dans la seconde directions.

13. La méthode conforme à l'une des revendications 10 à 12, dans laquelle la première et la seconde direction de propulsion ne sont pas parallèles et/ou confèrent un mouvement sinueux ou tortueux au jouet (100, 101, 103, 105, 200, 300, 400) et/ou font tourner le jouet dans la première ou dans la une seconde position, ou dans les deux positions.

14. La méthode conforme à l'une des revendications 10 à 13, consistant à faire fonctionner un mécanisme de mouvement secondaire configuré pour être actionné en faisant pivoter l'organe de commande de rotation (12, 212).

15. La méthode conforme à la revendication 14, dans laquelle le mécanisme de mouvement secondaire affecte la direction de propulsion et/ou un élément de commande de direction secondaire du jouet (100, 101, 103, 105, 200, 300, 400).
